# EUROPÄISCHE PATENTSCHRIFT

(11) **EP 0 418 587 B1**
(45) Veröffentlichungstag und Bekanntmachung des Hinweises auf die Patenterteilung: **21.02.1996**
(21) Anmeldenummer: 90116205.7
(22) Anmeldetag: 24.08.1990
(51) Int. Cl.: G01T 1/06

(54) **Gerät zur Messung der Strahlendosis eines Fluoreszenzglasdosimeters**
Apparatus for measuring the radiation dose of fluorescent glass dosimeters
Dispositif pour déterminer une dose de rayonnement d'un dosimètre en verre fluorescent

(30) Priorität: 18.09.1989 JP 239868/89
(43) Veröffentlichungstag der Anmeldung: 27.03.1991
(73) Patentinhaber: Forschungszentrum Karlsruhe Gesellschaft mit beschränkter Haftung, D-76138 Karlsruhe (DE); TOSHIBA GLASS CO., LTD., Haibara-gun Shizuoka-ken (JP)
(72) Erfinder: Burgkhardt, Bertram, D-7500 Karlsruhe 1 (DE); Piesch, Ernst, D-7514 Egg.-Leopoldshafen (DE); Vilgis, Michael, D-7570 Baden-Baden (DE); Ikegami, Toru, Haibara-gun, Shizuoka-ken (JP); Sato, Motoyuki, Haibara-gun, Shizuoka-ken (JP)
(74) Vertreter: Gottlob, Peter, Dipl. Ing.

(56) Entgegenhaltungen:
- EP-A- 0 324 944
- EP-A- 0 329 131
- DE-A- 2 930 137
- PATENT ABSTRACTS OF JAPAN vol. 14, no. 462 (P-1113), 5. Oktober 1990 & JP-A-2183193.
- PATENT ABSTRACTS OF JAPAN vol. 12, no. 309 (P-748), 23. August 1988 & JP-A-63079985.

## Beschreibung

Die vorliegende Erfindung betrifft ein Gerät zur Messung der Strahlendosis eines Fluoreszenzglasdosimeters und insbesondere ein Gerät zur Ermittlung der Strahlendosis, der Qualität (Energie) der Strahlung und der Einfallsrichtung der Strahlung.

Im allgemeinen wird ein aus Phosphatglas mit Silberionenanteil hergestelltes Fluoreszenzglaselement zur Messung der Strahlendosis verwendet. Nach Aktivierung des Fluoreszenzglaselements durch ionisierende Strahlung und anschließende Anregung durch UV-Licht mit einer Wellenlänge von 300 bis 400 nm wird aus einer vorher festgelegten Fläche des Fluoreszenzglaselements Fluoreszenz emittiert. Die Strahlendosis wird anhand der Fluoreszenzintensität gemessen, wobei die Eigenschaft, daß die Fluoreszenzintensität der Dosisbelastung proportional ist, genutzt wird.

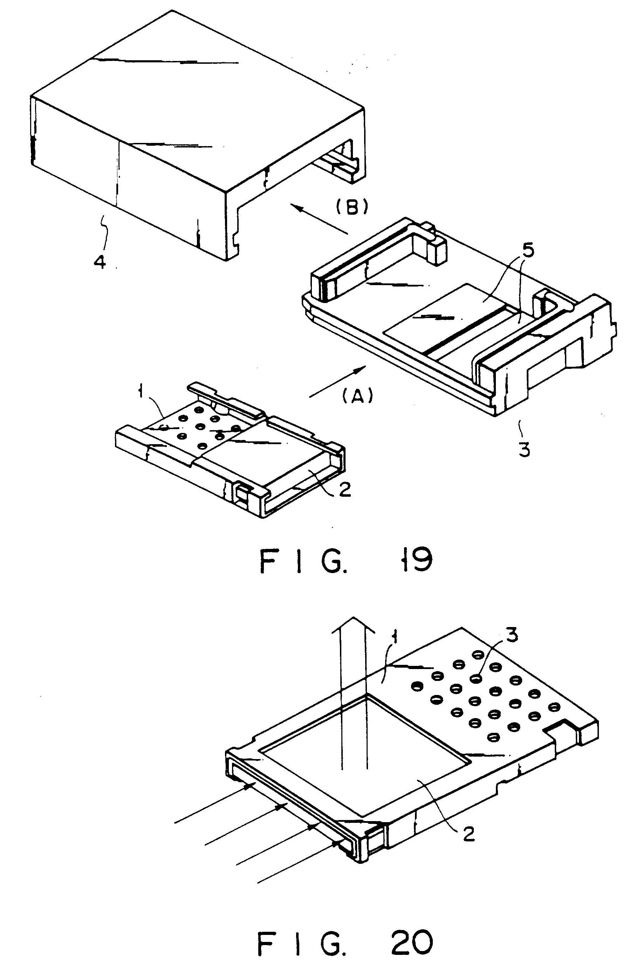

Konventionell werden nach diesem Prinzip arbeitende Fluoreszenzglasdosimeter entwickelt. Ein konventionelles Dosimeter hat den in Fig. 19 gezeigten Aufbau, so daß Personen, die in Anlagen mit Strahlung umgehen, die Strahlenexposition durch Tragen des Dosimeters messen (vgl. japanische Patentanmeldung Nr. Sho 62-334649 bzw. EP-A-0 324 944, oder auch EP-A- 0 329 131). Dieses tragbare Fluoreszenzglasdosimeter ist so aufgebaut, daß sich nach Einschieben eines Fluoreszenzglaselements 2 in einen Glaselementhalter 1 der Halter 1 seitlich in einem unteren Gehäuseteil 3 befindet, dargestellt durch einen Pfeil A, und daraufhin das untere Gehäuseteil 3 in ein oberes Gehäuseteil 4 geschoben wird, angezeigt durch Pfeil B. Die Bezugsnummer 5 zeigt ein Filter aus Zinn, das an der Innenseite des unteren Gehäuseteils 3 befestigt ist, um die Energieabhängigkeit der Strahlendosis zu kompensieren. Ebenso ist ein Zinnfilter an der Innenseite des oberen Gehäuseteils 4 befestigt.

Wenn in Anlagen, in denen mit Strahlen umgegangen wird, die Strahlenexposition beim Tragen des Fluoreszenzglasdosimeters sowie die Strahlendosis gemessen werden, werden das untere Gehäuseteil 3 vom oberen Gehäuseteil 4 getrennt, und der Glaselementhalter 1 wird herausgezogen. Dann trifft gemäß Fig. 20 UV-Licht, das beim Durchgang durch ein optisches Filter (nicht abgebildet) während der Emission des von einer Lichtquelle ausgesandten UV-Lichts in einem bestimmten Wellenlängenbereich selektiert wird, im wesentlichen senkrecht auf eine Fläche des Fluoreszenzglaselements 2 auf. Daraufhin wird im Fluoreszenzglaselement 2 aus silberaktiviertem Phosphatglas durch Anregung mit UV-Licht Fluoreszenz erzeugt und senkrecht zum UV-Licht abgelenkt. Die Fluoreszenz wird selektiv mit einem weiteren optischen Filter (nicht abgebildet) innerhalb eines spezifischen Wellenlängenbereichs ausgesucht und mit Hilfe eines Photomultipliers und dergleichen photoelektrisch umgewandelt. Die Intensität der Fluoreszenz, d.h. die Strahlendosis, kann aus dem Ausgangssignal des photoelektronischen Wandlers abgelesen werden.

Wird das Fluoreszenzglasdosimeter zur Messung der Strahlenexposition einzelner Personen benutzt, genügt es im allgemeinen, nur die Dosis zu messen. Unter Notfallbedingungen in den Anlagen oder wenn radioaktive Substanzen wegen unzureichender Abschirmung austreten oder der Mitarbeiter über lange Zeit tätig und einer höheren Menge Strahlendosis ausgesetzt ist, muß jedoch nicht nur die Dosis, sondern auch die Strahlenqualität und die Einfallsrichtung der Strahlung ermittelt werden, um die individuelle Strahlendosis des Mitarbeiters abzuschätzen und zu analysieren.

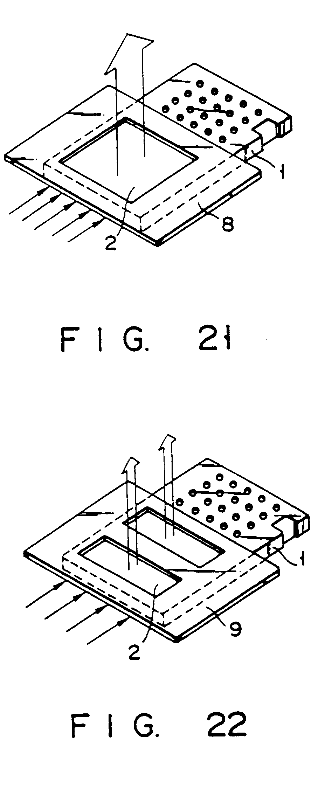

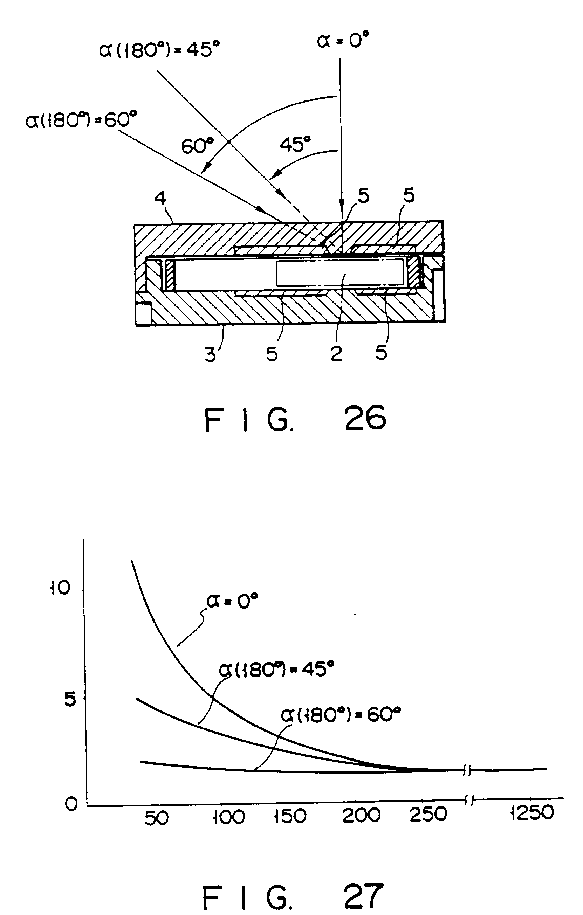

Wie oben beschrieben, wird das Filter 5 (siehe Figur 26) mit dem darin befindlichen Schlitz an der Innenseite des Gehäuses so befestigt, daß es die strahlenexponierte (bestrahlte) Seite des Fluoreszenzglaselements 2 abdeckt. Dieses Filter 5 wird wirkungsvoll eingesetzt zur Ermittlung der Strahlungsqualität. Beispielsweise werden dafür zwei Blenden verwendet. Eine Blende 8 zeigt Fig. 21; sie wird zur Messung nahezu der gesamten Fluoreszenz des Fluoreszenzglaselements 2 benutzt, wenn dieses im Normalfall zur Dosismessung eingesetzt wird. Die andere Blende 9 ist in Fig. 22 gezeigt; sie mißt lediglich die von den jeweiligen Teilen des Fluoreszenzglaselements 2 ausgehende Fluoreszenz, die zuvor hinter dem Filter 5 mit Gamma- und Röntgenstrahlen bestrahlt wurde. Diese Blenden 8 und 9 werden im Wechsel auf das Fluoreszenzglaselement 2 aufgesetzt, und der Betrag der Fluoreszenz (A) und (B), der durch die Blende 8 bzw. 9 geht, wird gemessen. Die Qualität der Strahlung kann ermittelt werden, indem man das Verhältnis von Fluoreszenz (A) zu Fluoreszenz (B) bestimmt.

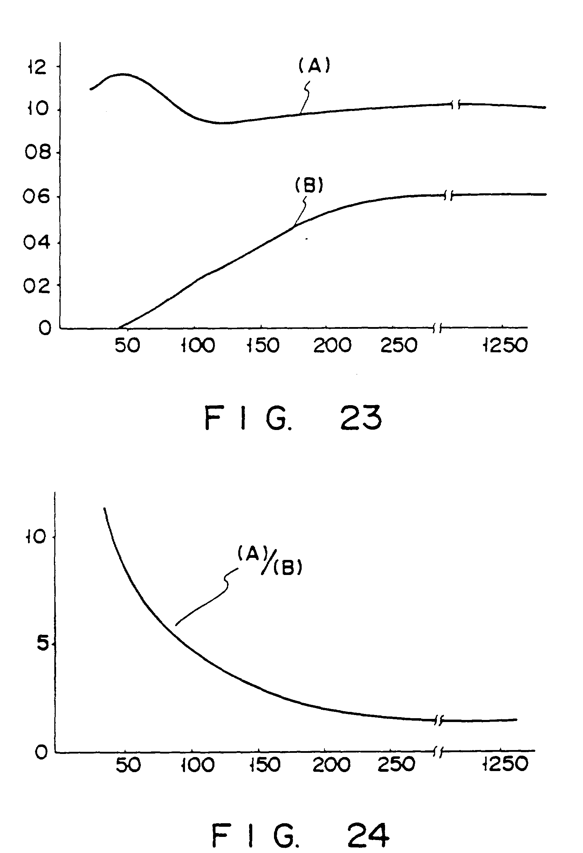

Fig. 23 zeigt relative Energieabhängigkeitskurven (A), (B), die sogenannte Energieabhängigkeit des Ansprechvermögens, wenn die Fluoreszenz des Fluoreszenzglaselements 2, das vorher mit der gleichen Dosis von Gamma- und Röntgenstrahlen bestrahlt worden ist, mittels Blende 8 bzw. 9 nachgewiesen wird. Wie aus Fig. 24 ersichtlich, ergeben sich die Quotienten des relativen Ansprechvermögens durch Berechnung (A/B). Dementsprechend kann die Qualität der bei der Bestrahlung vorhandenen Gamma- und Röntgenstrahlen aus den Quotienten des relativen Ansprechvermögens abgeschätzt werden.

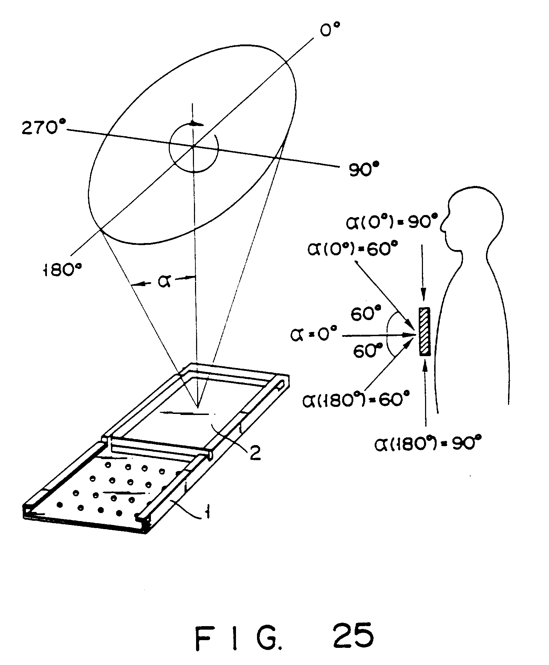

Dieses konventionelle Verfahren zur Abschätzung der Strahlenqualität ist jedoch mit einem Problem verbunden, wenn die Richtung der auf das Dosimeter auftreffenden Strahlung von der senkrechten Vorzugsachse auf der exponierten Fläche des Fluoreszenzglaselements abweicht. Unter Bezugnahme auf Fig. 25 wird angenommen, daß die Vorzugsrichtung senkrecht zur exponierten Fläche des Fluoreszenzglaselements α= 0° ist, die senkrechte Aufwärtsrichtung α(0°) = 90°, die senkrechte Abwärtsrichtung α (180°) = 90° und die waagerechte Richtung nach links α (90°) = 90°. Die Winkelangaben in Klammern bezeichnen die β-Winkel. Wenn die Strahlung beispielsweise in einer Richtung α (180°) = 45° oder α (180°) = 60° auf das Dosimeter auftrifft, was Fig. 26 zeigt, sind die Kurvenverhältnisse für das relative Ansprechvermögen (A/B) der auftreffenden Strahlung, die zur Abschätzung der Strahlenqualität dienen, flacher als die Kurven der Strahlung, die in Richtung α = 0° auftrifft. Wenn sich also die Strahlenenergie ändert, ändern sich die relativen Ansprechverhältnisse nur geringfügig, wodurch die Abschätzung der Strahlenqualität wesentlich ungenauer wird.

Unter den oben genannten Bedingungen ist es eines der Ziele der vorliegenden Erfindung, ein Gerät zur Dosismessung bereitzustellen, in dem in einfacher Weise eine Vielzahl von Fluoreszenzintensitätsverteilungen ermittelt und die Qualität der Strahlung und/oder die Einfallsrichtung der Strahlung mit hoher Genauigkeit abgeschätzt wird.

Ein weiteres Ziel der vorliegenden Erfindung ist die Bereitstellung eines Geräts zur Messung der Strahlendosis, in dem die Positionen für die Fluoreszenzmessung, die Fluoreszenzmeßfläche und dergleichen durch ein einfaches Blendensystem verändert werden, wodurch die Fluoreszenzintensitätsverteilung einfach und mit hoher Genauigkeit ermittelt werden kann.

Zur Lösung des Problems ermöglicht die in Patentanspruch 1 beschriebene Erfindung ein Gerät zur Dosismessung, das ein Fluoreszenzblendensystem zur Veränderung der Fluoreszenzmeßpositionen und/oder der Fluoreszenzmeßflächen auf der Meßseite eines Fluoreszenzglaselements in mindestens drei Schritten umfaßt, sowie eine Vorrichtung zur Messung der Fluoreszenzintensität zur Ermittlung der Fluoreszenzintensitätsverteilung aufgrund der von der Fluoreszenzmeßseite des Fluoreszenzglaselements ausgehenden Fluoreszenz entsprechend der ausgewählten Fluoreszenzmeßpositionen und/oder der gewählten der Fluoreszenzmeßflächen auf der Meßseite des Fluoreszenzglaselements.

Mit der in Anspruch 2 genannten Erfindung wird der in Anspruch 1 definierte Aufbau ergänzt durch eine Vorrichtung zur Abschätzung der Strahlungsqualität und/oder der Einfallsrichtung der auftreffenden Strahlung.

Das in Anspruch 3 genannte Gerät besitzt erfindungsgemäß ein Fluoreszenzblendensystem, bestehend aus einer Blende mit Öffnung und vorher festgelegter Fläche sowie einer in der Weise ausgeführten Abdeckplatte, daß sie parallel zur Blende bewegt werden kann, um die Fluoreszenzmeßposition oder -fläche zu verändern. Aufgrund der in Anspruch 4 beschriebenen Erfindung wird die Blende als Fluoreszenzglasablageplatte benutzt. In Anspruch 5 der vorliegenden Erfindung wird ein konischer Bereich auf der Kante der Blendenöffnung und/oder im vorderen Bereich der Abdeckplatte in der Weise festgelegt, daß der Fluoreszenzbeitrag von der Dicke der Blende und/oder der Abdeckplatte nicht beeinflußt wird.

Mit der in den Ansprüchen 6 und 7 beschriebenen Erfindung wird in weiterer Ausführung des Meßgerätes gemäß Anspruch 1 bis 5 ein Blendensystem für UV-Licht bereitgestellt, mit dem die Fläche des einfallenden UV-Lichts verändert werden kann.

Die Erfindung gemäß Anspruch 8 macht deutlich, daß zwei einander überlappende Blenden als Fluoreszenzblendensystem und/oder Blendensystem für UV-Licht benutzt werden und eine der Blenden bewegt wird, um die Position und/oder die Fläche auf der Fluoreszenzmeßseite des Fluoreszenzglaselements und/oder der Eingabeseite des UV-Lichts zu verändern.

Die vorliegende Erfindung gemäß den Patentansprüchen kann wie folgt vorteilhaft genntzt werden:

Aufgrund der Erfindung gemäß Anspruch 1 werden die Fluoreszenzmeßpositionen und/oder Fluoreszenzmeßflächen in mindestens drei Schritten verändert, und das Fluoreszenzglaselement wird immer dann mit UV-Licht angestrahlt, wenn eine Änderung stattfindet. Die Intensitäten der von der Fluoreszenzmeßseite des Fluoreszenzglaselements ausgehenden Fluoreszenz werden gemessen, um Fluoreszenzintensitätsverteilungen zu erhalten, die den veränderten Schritten entsprechen, wodurch die Qualität der Strahlung und dergleichen richtig abgeschätzt werden kann.

Aufgrund der Erfindung gemäß Anspruch 2 wird die Qualität der Strahlung aus einem Höchst- und Mindestwert jeder Fluoreszenzintensitätsverteilung ermittelt, und auch die Einfallsrichtung der auftreffenden Strahlung wird aus der Fluoreszenzintensitätsverteilung bestimmt.

Aufgrund der Erfindung gemäß Anspruch 3 wird die Abdeckplatte kontinuierlich oder schrittweise waagerecht und parallel zu der Blende mit Öffnung bewegt, deren Fläche der Fluoreszenzmeßseite des Fluoreszenzglaselements entspricht, wodurch sich die Fluoreszenzmeßpositionen und/oder -flächen in einer Vielzahl von Schritten verändern.

Aufgrund der Erfindung gemäß Anspruch 4 stellt darüber hinaus die Blende selbst eine Glaselementablageplatte dar. Das Fluoreszenzglaselement wird nur ausgemessen, wenn es in eine vorher festgelegte Position auf der Blende gebracht wird. Da ein eigener Ablagetisch nicht erforderlich ist, wird der Raum im Gerät gut ausgenutzt und die Anzahl der Geräteteile verringert.

Aufgrund der Erfindung gemäß Anspruch 5 werden außerdem die über die Fluoreszenzmeßseite hinausragenden konischen Bereiche aus der Kante der Blendenöffnung und dem vorderen Teil der Abdeckplatte gebildet. Damit kann die erforderliche Fluoreszenzmenge auf der Vorrichtung zur Messung der Fluoreszenzintensität auftreffen, ohne durch die Dicke der Blende und der Abdeckplatte gestört zu werden.

Aufgrund der Erfindung gemäß Anspruch 6 verändern sich darüber hinaus die Meßpositionen und/oder die Meßfläche des UV-Lichts in mindestens zwei Schritten durch das Blendensystem für UV-Licht. Durch Messung der Intensität der von der Fluoreszenzmeßseite des Fluoreszenzglaselements ausgehenden Fluoreszenz ergibt sich eine den jeweiligen Schritten entsprechende Fluoreszenzintensitätsverteilung, wodurch die Qualität der Strahlung oder dergleichen abgeschätzt werden kann.

Weiterhin wird aufgrund der Erfindung gemäß Anspruch 7 die Qualität der Strahlung aus den Fluoreszenzintensitätsquotienten abgeschätzt, und die Einfallsrichtung der Strahlung wird aus der Fluoreszenzdichteverteilung abgeschätzt, nachdem die Fluoreszenzintensitätsverteilung in der in der Erfindung gemäß Anspruch 6 beschriebenen Weise ermittelt worden ist.

Weiterhin werden aufgrund der Erfindung gemäß Anspruch 8 zwei Blenden benutzt. Wird eine davon bewegt, verändern sich die Positionen und die Flächen des einfallenden UV-Lichts für das Fluoreszenzglaselement auf einfache Weise.

Es folgt eine Kurzbeschreibung der Figuren:

Fig. 1 bis 18 zeigen Ausführungsbeispiele der vorliegenden Erfindung.

Fig. 1 zeigt einen schematischen Aufbau der vorliegenden Erfindung.

Fig. 2 ist eine perspektivische Ansicht eines Ausführungsbeispiels, welche die Veränderungen der Fluoreszenzmeßpositionen und -flächen auf der Fluoreszenzmeßseite eines Fluoreszenzglaselements zeigt.

Fig. 3 ist ein Schnitt entlang der Linie C-C′ in Fig. 2.

Fig. 4 bis 8 zeigen die Kurven der relativen Fluoreszenzintensität an den Meßpositionen, aufgetragen für verschiedene Energien und Einfallswinkel (Kurven der Fluoreszenzintensitätsverteilung).

Fig. 9 ist ein Diagramm, mit dem die Verhältnisse der Höchstwerte der Fluoreszenzintensitätsverteilungen zu den Mindestwerten der Fluoreszenzintensitätverteilungen dargestellt werden.

Fig. 10 zeigt eine Vorrichtung zur Veränderung der Positionen und Flächen auf der Fluoreszenznachweisseite, wobei Fig. 10(a) eine Draufsicht darstellt, Fig. 10(b) eine Schnittzeichnung entlang der Linie A-A′ in Fig. 10(a).

Fig. 11 zeigt den konischen Teil am Umfang einer Blendenöffnung und im vorderen Teil einer Abdeckplatte.

Fig. 12 zeigt eine Vorrichtung zur Veränderung der Einfallpositionen und -flächen des UV-Lichts.

Fig. 13 zeigt die Vorderansicht einer ersten und einer zweiten Blende.

Fig. 14(a) bis 14(c) zeigen die Lage des Fluoreszenzglaselements, der Öffnung der ersten Blende und der Öffnung der zweiten Blende zueinander.

Fig. 15(a) zeigt das Meßwertverhältnis in Abhängigkeit von der Energie.

Fig. 15(b) zeigt das Ionendosis-Ansprechvermögen in Abhängigkeit von der Energie.

Fig. 15(c) zeigt eine Beziehung zwischen dem Meßwertverhältnis in Fig. 15(a) und dem Korrektionsfaktor.

Fig. 16 und 17 zeigen eine Vorrichtung zur Veränderung der Emissionspositionen und -flächen von UV-Licht, wobei Fig. 16 die Vorderansicht darstellt und Fig. 17 einen Seitenaufriß dieser Vorrichtung.

Fig. 18 zeigt die Veränderungen von Form und Fläche des Querschnitts des UV-Lichtbündels, wenn eine Blende eine spezifische Öffnungsform aufweist.

Fig. 19 bis 27 zeigen ein konventionelles Gerät, wobei Fig. 19 eine perspektivische Darstellung eines Fluoreszenzglasdosimeters ist, während Fig. 20 zeigt, wie das UV-Licht auf ein in einem Glaselementhalter befestigtes Fluoreszenzglaselement gelenkt und die Fluoreszenz von diesem Fluoreszenzglaselement emittiert wird;

Fig. 21 und 22 zeigen die Ansicht kurz vor der Veränderung von Lage und Fläche nach Ermittlung der Strahlenqualität;

Fig. 23 und 24 zeigen den Fluoreszenzbetrag in Fig. 21 bzw. 22;

Fig. 25 und 26 erläutern die Richtungen, in denen das Licht auf dem Fluoreszenzglaselement auftrifft;

Fig. 27 ist ein Diagramm des Meßwertverhältnisses in Abhängigkeit von der Energie und erläutert die Probleme mit dem Stand der Technik.

Ausführungsbeispiele der vorliegenden Erfindung werden im folgenden unter Bezugnahme auf die Figuren beschrieben.

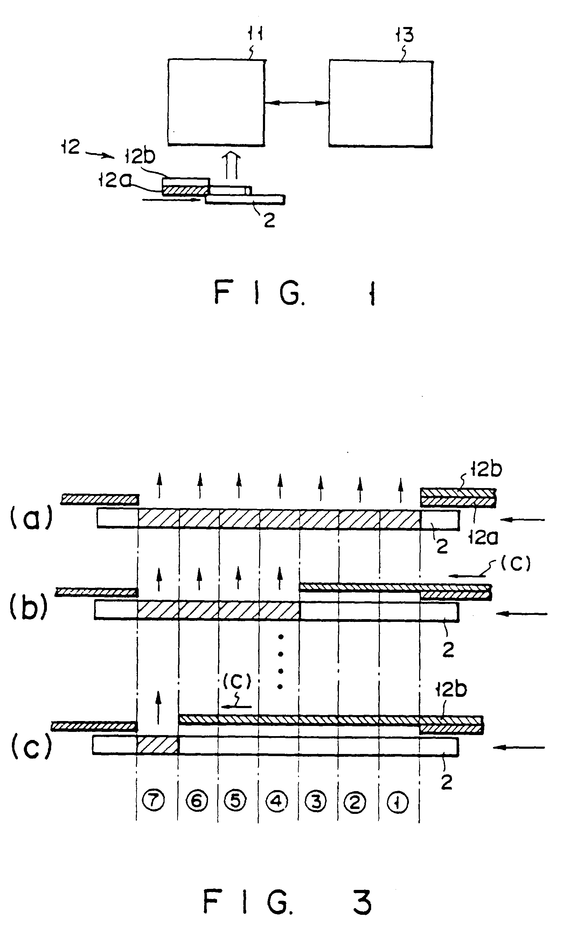

Zuerst wird ein Ausführungsbeispiel der vorliegenden Erfindung gemäß Anspruch 1 bis 3 unter Bezugnahme auf Fig. 1 bis 3 erläutert. Die dem Stand der Technik entsprechenden Teile und Elemente werden mit denselben Bezugsnummern bezeichnet und nicht ausführlich erläutert. Wenn das Personal in einer Anlage, in der mit Strahlung umgegangen wird, ein Fluoreszenzglaselement 2 mit sich führt, dann befindet sich dieses in den Gehäusen 3 und 4, nachdem es vorher in einem Glaselementhalter 1 wie das konventionelle Fluoreszenzglaselement untergebracht war. Da dies so ist, wird lediglich das Auswertesystem erläutert.

Zunächst wird ein Fluoreszenzblendensystem 12 zwischen das Fluoreszenzglaselement 2 und die Vorrichtung zum Messen der Fluoreszenzintensität 11 gebracht. Wie aus Fig. 2 ersichtlich, umfaßt der Mechanismus 12 eine Blende 12a mit einer Öffnung 12a′, deren Fläche im wesentlichen gleich der des größeren Teils des Fluoreszenzglaselements 2 ist, sowie eine Abdeckplatte 12b, die auf der Oberseite (beispielsweise) der Blende 12a gleitet, so daß sie den Bereich 100 bis 0% (beispielsweise) der Öffnung 12a′ der Blende 12a überstreicht. Fig. 3 zeigt einen Querschnitt der Einheit, bestehend aus Fluoreszenzglaselement 2 und Fluoreszenzblendensystem 12 entlang der Linie C-C′ in Fig. 2(a) sowie die Lage des Fluoreszenzglaselements 2, der Blende 12a und der Abdeckplatte 12b zueinander. Wie aus Fig. 3 ersichtlich, kann die Abdeckplatte 12b durch einen Motor horizontal in sechs Schritten über jeweils die gleiche Strecke in der durch einen Pfeil (C) angegebenen Richtung bewegt werden. Im siebten Schritt wird die Öffnung 12a′ der Blende 12 von der Abdeckplatte 12b voll abgedeckt, (d.h. der nicht abgedeckte Bereich der Öffnung 12a′ ist 0%). Die Lage der Elemente in Abb. 2 (a) zueinander entspricht der in Fig. 3(a), und die Öffnung 12a′ der Blende 12a wird nicht durch die Abdeckplatte 12b eingeschränkt (d.h. der nicht abgedeckte Bereich der Öffnung 12a′ beträgt 100%). Die Lage der Elemente in Fig. 2(b) zueinander entspricht der in Fig. 3(b), und der nicht abgedeckte Bereich der Öffnung 12a′ beträgt ca. 57%. Fig. 2(c) entspricht Fig. 3(c), und der nicht abgedeckte Bereich der Öffnung 12a′ beträgt ca. 15%.

Eine Vielzahl von Abdeckplatten 12b, jede mit Schlitz versehen und von anderer Größe, kann nacheinander auf die Blende aufgesetzt werden oder es kann eine Abdeckplatte mit Schlitz in der durch Pfeil (C) angegebenen Richtung bewegt werden, um die Fluoreszenzmeßpositionen zu verändern.

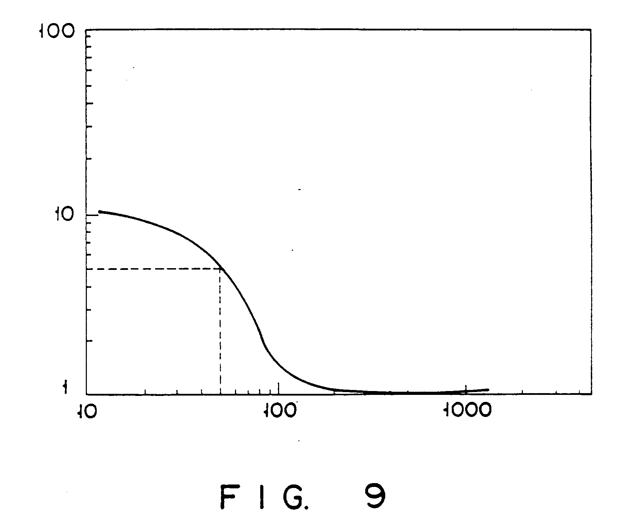

Die Vorrichtung zur Messung der Fluorszenzintensität 11 hat die Aufgabe, die weiter unten beschriebenen Fluoreszenzintensitätsverteilungen oder dergleichen durch Messung der Intensitäten der von der Fluoreszenzmeßseite des Fluoreszenzglaselements 2 durch die Öffnung 12a′ emittierten Fluoreszenz zu bestimmen - während die Abdeckplatte 12b waagerecht in sechs Schritten mit gleicher Geschwindigkeit bewegt wird. Als Hardware besitzt sie einen Zentralrechner, der Rechenvorgänge nach einem vorher festgelegten Ablaufprogramm durchführt, einen Signalwandler zur Anpassung der Fluoreszenzintensität an ein gewünschtes Signal, Speichereinrichtungen zum Speichern der Meßwerte der Fluoreszenzintensitäten für beliebige Öffnungsweiten der Öffnung 12a′, der zuvor ermittelten Fluoreszenzintensitätsverteilung für jede Energie sowie des Verhältnisses von Höchstwert zu Mindestwert für jede Energie, wie weiter unten unter Bezugnahme auf Fig. 9 beschrieben, und die zur Datenverarbeitung erforderlichen Einrichtungen.

Mit der Auswerteeinheit 13 werden die Qualität der Strahlung sowie die Einfallsrichtung der auftreffenden Strahlung aufgrund der Fluoreszenzintensitätsverteilung, die mit der Fluoreszenzintensitätsmeßeinrichtung 12 ermittelt wird, bestimmt.

Beim Einsatz wird das Fluoreszenzglaselement, das sich in den Gehäusen 3 und 4 befindet, in der Regel an einen vorher festgelegten Ort gebracht. Dort wird das untere Gehäuseteil 3 aus dem oberen Gehäuseteil 4 entfernt und der Glaselementhalter 1 dann aus dem unteren Gehäuseteil 3 herausgezogen. Daraufhin wird der Halter 1 mit dem Fluoreszenzglaselement an einen vorher festgelegten Meßort gebracht und auf einem Meßtisch fixiert.

Fig. 2 zeigt, daß beim Aussenden von UV-Licht durch die angeregte UV-Lichtquelle in Richtung des Fluoreszenzglaselements 2 Fluoreszenz von der Fluoreszenzmeßseite des Fluoreszenzglaselements 2 emittiert wird. Nach Durchgang durch die Öffnung 12a′ der Blende 12a trifft die Fluoreszenz auf die Vorrichtung zur Fluoreszenzintensitätsmessung 11. Zuerst wird die normale Messung der Strahlendosis durchgeführt, wobei sich die Abdeckplatte 12b in der in Fig. 2(a) angegebenen Lage befindet, in der die Öffnung 12a′ der Blende 12a ganz, d.h. zu 100%, geöffnet ist. Wenn die Vorrichtung zur Fluoreszenzintensitätsmessung 11 eine Fluoreszenzintensität oberhalb der vorher festgelegten Schwellenwerte mißt, werden die Qualität der Strahlung und die übrigen Werte ermittelt. Die Qualität der Strahlung kann mit Hilfe der Blenden 12a mit beliebiger Weite gemessen werden. Bei diesem Ausführungsbeispiel befindet sich aber die Abdeckplatte 12b an der oberen Seite der Blende 12a. Da die Abdeckplatte 12b mit einem Motor in sechs Schritten über die jeweils gleiche Strecke in der durch den Pfeil (C) in Fig. 3 angegebenen Richtung horizontal bewegt wird, wird die Intensität der auf der Fluoreszenzmeßseite des Fluoreszenzglaselements 2 nachgewiesenen Fluoreszenz in jedem Schritt gemessen. Entsprechend führt die Vorrichtung zum Ablesen der Intensität 11 die Messung insgesamt siebenmal durch, wenn die Messung zum Zeitpunkt der vollständigen Öffnung der Öffnung 12a′ der Blende 12a (d.h. 100% geöffnet) einbezogen wird. Mit dieser Vorrichtung zur Messung der Fluoreszenzintensität 11 ergeben sich die Fluoreszenzintensitätsverteilungen aufgrund der Differenzen zwischen den angezeigten und mit Hilfe des Zentralrechners und dergleichen errechneten Werten.

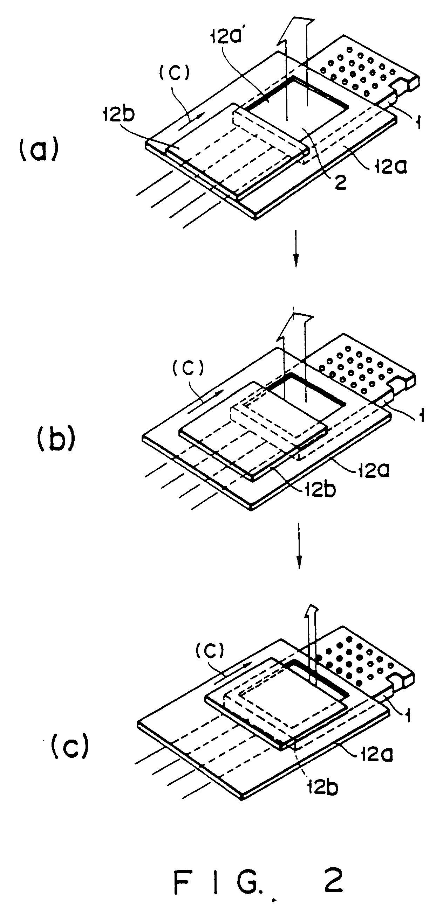

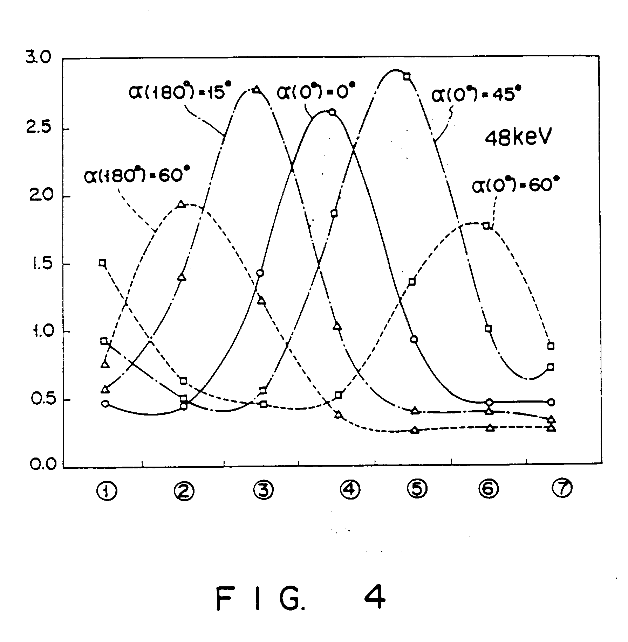

Fig. 4 bis 8 zeigen die Fluoreszenzintensitätsverteilungen, bei denen die Strahlenenergie und die Einstrahlwinkel der Strahlung verändert werden, um die vorliegende Erfindung verständlich zu machen. Es ergibt sich aus diesen Figuren, daß im Energiebereich der Gamma- und Röntgenstrahlen unterhalb 150 keV aufgrund des sehr hohen Ansprechvermögens und des oben genannten Abschirmeffekts des Fluoreszenzglaselements in dem Teil des Glases, auf den die Gamma- und Röntgenstrahlung durch den Schlitz zwischen den an die Kunststoffgehäuse 3 und 4 befestigten Filterpaaren 5 auftrifft, bzw. in dem Teil des Glases, vor dem die Gamma- und Röntgenstrahlung über Filter 5 geschwächt wird, unterschiedliche Intensitätsverteilungen erhalten werden. Dementsprechend ergeben sich unterschiedliche Fluoreszenzintensitäten je nach Energie und/oder Einfallswinkel der Gamma- und Röntgenstrahlen.

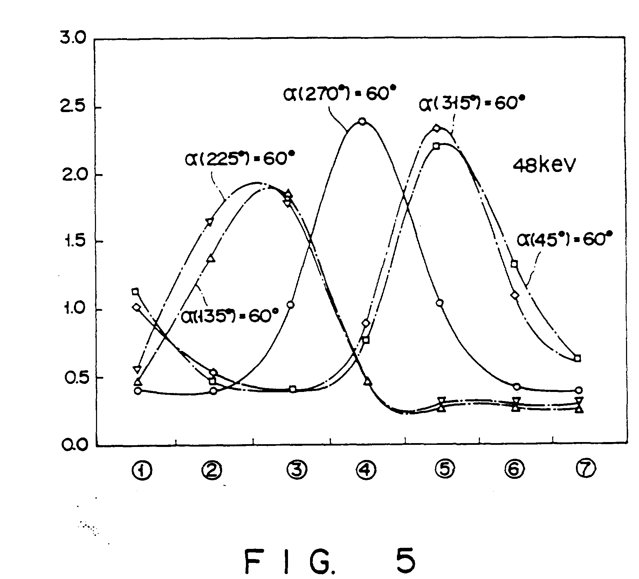

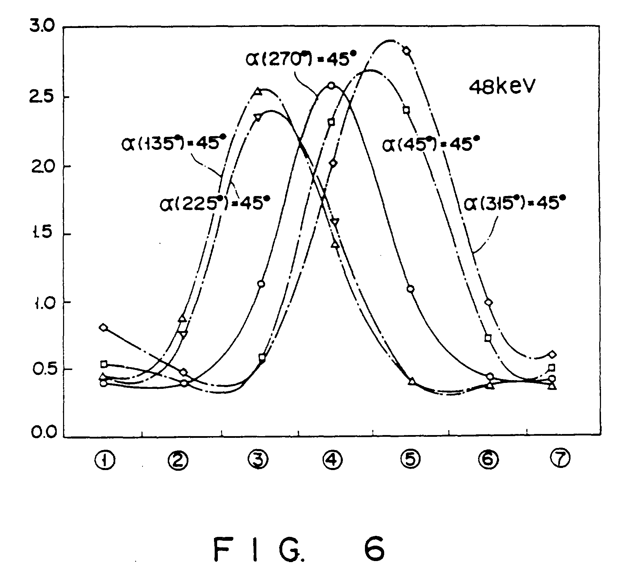

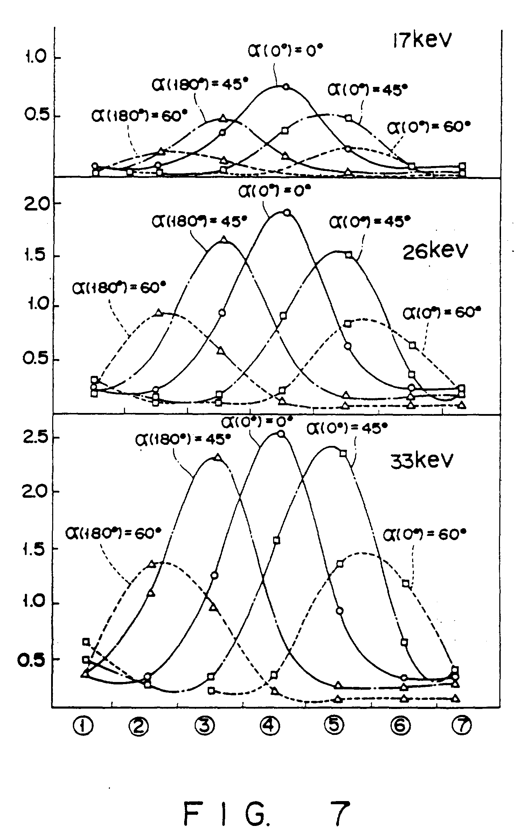

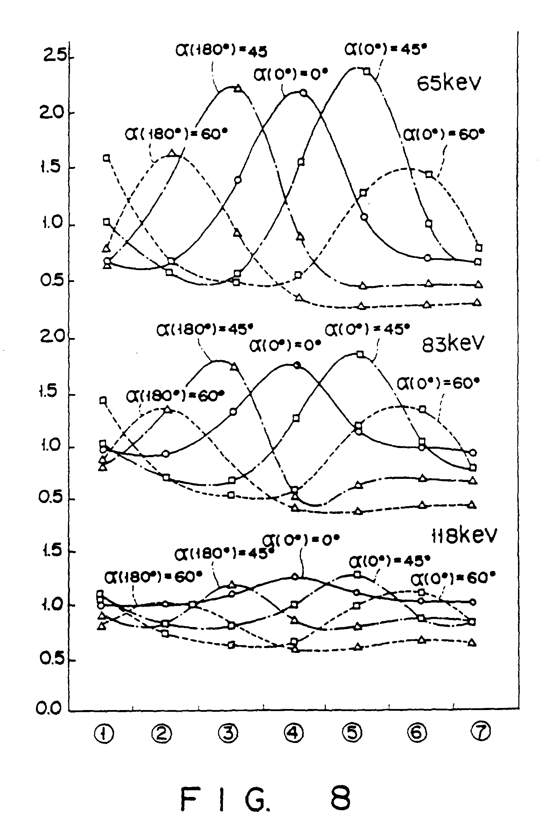

Fig. 4 bis 6 zeigen die Fluoreszenzintensitätsverteilungsdiagramme, wenn mit Röntgenstrahlung der effektiven Energie von 48 keV bestrahlt wird. Fig. 4 zeigt das Fluoreszenzintensitätsverteilungsdiagramm, wenn das Fluoreszenzglaselement 2 mit Röntgenstrahlen unter verschiedenen Winkeln bestrahlt wird, wobei β = 0° und β = 180° als Bezugswinkel ausgewählt werden. Es zeigt sich aufgrund dieser Figur, daß bei Bestrahlung mit Röntgenstrahlen genau auf die Vorderseite der Emissionsfläche des Fluoreszenzglaselements der Höchstwert der Fluoreszenzintensität in der Mitte des Fluoreszenzglaselements 2 liegt. Ist jedoch α gleich oder größer 45°, tritt dieser Höchstwert in einem von der Mitte des Fluoreszenzglaselements 2 abweichenden Teil auf. Fig. 5 zeigt die Fluoreszenzintensitätsverteilung, wenn Röntgenstrahlung unter verschiedenen Eintrittswinkeln einfällt, wobei α = 60° als Bezugswinkel ausgewählt wird, und Fig. 6 zeigt die Fluoreszenzintensitätsverteilung, wenn Röntgenstrahlung unter verschiedenen Winkeln β einfällt, wobei α = 45° als Bezugswinkel ausgewählt wird. Fig. 7 und 8 zeigen die Fluoreszenzintensitätsverteilungsdiagramme des Fluoreszenzglaselements für Röntgenstrahlung mit der Energie 17 keV, 26 keV, 33 keV, 65 keV, 83 keV und 118 keV, die unter den Winkeln β = 0°, β = 180°C, α = 0°, α = 45° und α =60° auftrifft.

Nach Ermittlung der Fluoreszenzintensitätsverteilung in den sieben Meßpositionen eines einzelnen Fluoreszenzglaselements für die jeweilige Energie ergeben sich die Verhältnisse der Höchstwerte zu den entsprechenden Mindestwerten gemäß Fig. 9. In dem in Fig. 9 gezeigten Diagramm unterscheiden sich die Meßwertverhältnisse voneinander je nach dem Betrag der Energie, d.h. der Strahlenqualität. Wenn α beispielsweise zwischen 0° und 60° liegt, ergeben sich für β = 0° und β = 180° ähnliche Kurven, und die Meßwertverhältnisse sind etwa 1, wenn die Strahlungsenergie oberhalb 150 keV liegt. Die Meßwertverhältnisse nehmen jedoch zu, wenn die Energie der emittierten Strahlung unter diesem Wert liegt.

Dementsprechend speichert die Speichereinrichtung der Vorrichtung zur Messung der Fluoreszenzintensität 11 erfindungsgemäß die in Fig. 9 gezeigten Kurven im voraus. Nach Ermittlung der Fluoeszenzintensitätsverteilungen wird entschieden, ob das Meßwertverhältnis der Höchst- zu den Mindestwerten der Fluoreszenzintensitätsverteilung bestimmt werden soll.

Wenn sich aus der Einrichtung zur Fluoreszenzintensitätsmessung 11 ergibt, daß das Verhältnis größer als 1 ist, d.h. die Energie weniger als 150 keV beträgt, wird mit der Vorrichtung 13 der Wert der Strahlenqualität ermittelt. Ist das gemessene Verhältnis gleich 5, wird der Wert der Strahlenqualität zu 50 keV bestimmt; s. Fig. 9. Aus Fig. 4 ergibt sich, daß die Strahleneinfallsrichtungen nach den Orten beurteilt werden, an denen die Höchstwerte auftreten. Tritt der Höchstwert auf der rechten Seite (beispielsweise in Position 6) auf, wird in Bezug auf die Person angenommen, daß die Strahlung von der Decke kommt; wenn der Höchstwert auf der linken Seite auftritt, (beispielsweise in Position 2), wird davon ausgegangen, daß die Strahlung von unten kommt.

Bei diesem Ausführungsbeispiel werden die Fluoreszenzintensitäten des Fluoreszenzglaselements 2 gemessen durch Veränderung der Öffnungsweiten 12a′ der Blende 12a (d.h. der Fluoreszenzmeßpositionen und/oder -flächen) mit Hilfe der Abdeckplatte 12b und der Fluoreszenzintensitätsverteilung für jede Fluoreszenzmeßposition und/oder -fläche. Die Qualität der Strahlung ergibt sich auch einfach aus dem Verhältnis von Höchstwert zu Mindestwert der entsprechenden Fluoreszenzintensitätsverteilung. Weiterhin kann von den Positionen, an denen die Höchstwerte auftreten, leicht auf die Einfallsrichtung der Strahlung geschlossen werden, so daß hinsichtlich des Strahlenschutzes die aktuelle Strahlenexposition sicher kontrolliert werden kann.

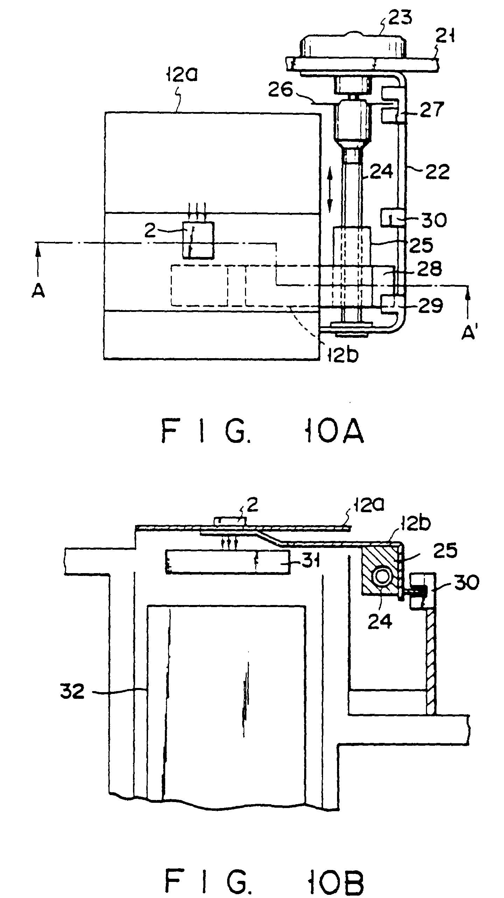

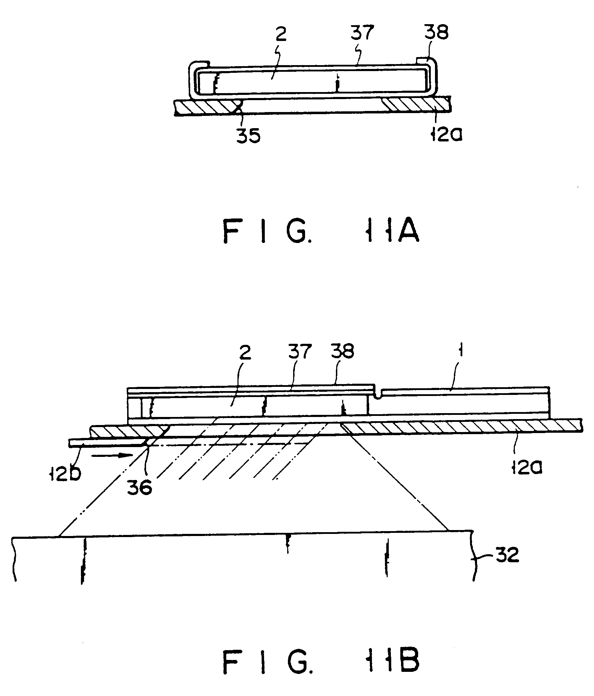

Ein Ausführungsbeispiel der Erfindung gemäß Anspruch 4 wird unter Bezugnahme auf Fig. 10 erläutert. Fig. 10(a) ist eine Draufsicht, Fig. 10(b) ein Schnittbild entlang der Linie A-A′ in Fig. 10(a). Im allgemeinen wird das Fluoreszenzglaselement 2 auf einen Meßtisch oder eine Glaselementablageplatte in eine vorher festgelegte Position gebracht. Erfindungsgemäß wird jedoch auch die Blende 12a als Glaselementablageplatte benutzt. Ein U-förmiges Teil 22 besitzt einen mit einem Rahmen 21 verbundenen Arm, während der andere Arm mittels einer Blende 12a mit einer Öffnung 12a′ befestigt wird, die als Glasablageplatte dient. Ein Positionierungsmotor 23 ist an der Vorderseite des Rahmens 21 gegenüber der Seite angebracht, mit der das U-förmige Teil 22 verbunden ist. An der Drehwelle des Motors 23 ist eine Schraubenwelle 24 befestigt, welche die beiden Arme des U-förmigen Teils 22 überbrückt. In die Schraubenwelle 24 rastet ein Block 25 in der Weise ein, daß er in die durch einen Pfeil angegebenen Richtungen bewegt werden kann. Von Block 25 erstreckt sich entlang der Unterseite der Blende 12a eine Abdeckplatte 12b. Die Bezugsnummern zeigen eine kreisförmige geschlitzte Platte 26, einen Prüfsensor für die Drehbewegung 27, ein Prüfstück 28, einen Prüfsensor für den Ausgangspunkt 29 und einen Prüfsensor für den Endpunkt 30. Weitere Bezugsnummern bezeichnen ein Lichtfilter 31 bzw. ein photoelektronisches Wandlerteil 32. Fig. 11 zeigt, wie ein Glaselementhalter 1 für das Fluoreszenzelement 2 mittels Innen- und Außenstange an der Blende 12a befestigt ist.

Nachdem das Fluoreszenzglaselement 2 auf Blende 12a in eine vorher festgelegte Position gebracht ist, wird UV-Licht auf das Fluoreszenzglaselement 2 in der in Fig. 10(a) gezeigten Weise gelenkt, um das Element 2 anzuregen. Das photoelektronische Wandlerteil 32 nimmt die von der Fluoreszenzmeßseite des Fluoreszenzglaselements 2 ausgehende Fluoreszenz über das Lichtfilter 31 auf und wandelt die Fluoreszenz in ein elektrisches Signal um. Auf diese Weise wird die Fluoreszenzintensität in dem Zustand gemessen, in dem die Öffnungsweite der Öffnung 12a′ der Blende 100% beträgt, und die Fluoreszenzintensität wird aus diesem Meßwert bestimmt.

Dann wird der Positioniermotor 23 angetrieben, um den Block 25 in Richtung auf den Motor 23 in der Weise zu bewegen, daß die Abdeckplatte 12b an der Unterseite der Blende 12a in einer Richtung gleitet, in der die Öffnungsweite der Öffnung 12a′ kleiner wird. Der Prüfsensor für die Drehbewegung 27 registriert die Anzahl der Umdrehungen der kreisrunden geschlitzten Platte 26, die an der mit der Drehwelle des Motors 23 verbundenen Schraubenwelle 24 befestigt ist, und hält den Motor 23 immer dann an, wenn die kreisförmige geschlitzte Platte 26 eine bestimmte Anzahl von Umdrehungen ausgeführt hat. Danach ergibt sich die Fluoreszenzintensitätsverteilung entsprechend durch Messung der Intensität der vom Fluoreszenzglaselement 2 emittierten Fluoreszenz. Wenn der Positioniermotor 23 eine bestimmte Anzahl von Drehungen ausgeführt hat und das Prüfstück 28 den Prüfsensor für den Endpunkt 30 erreicht, erzeugt darüber hinaus der Sensor 30 ein Endsignal, und die Messung der Fluoreszenzintensitäten der vom Fluoreszenzglaselement 2 ausgehenden Fluoreszenz ist beendet.

Bei diesem Ausführungsbeispiel ist die Blende 12a auch als Glaselementablageplatte ausgeführt. Damit verringert sich die Anzahl der Bauteile, und das Volumen im Gerät wird gut ausgenutzt. Da Fluoreszenzglaselement 2, Blende 12a und Abdeckplatte 12b von oben nach unten in der genannten Reihenfolge angeordnet sind, ist der Abstand zwischen Fluoreszenzglaselement 2 und Blende 12a sowie Abdeckplatte 12b kleiner als der Abstand der in umgekehrter Reihenfolge angeordneten entsprechenden Teile. Durch Anbringen der durch Positioniermotor 23 horizontal in der Richtung beweglichen Abdeckplatte 12b, in der sich die Öffnungsweite der Öffnung 12a′ der Blende 12a verringert, und durch Anbringung des Prüfsensors für die Drehbewegung 27 kann die Öffnungsweite der Blende 12a beliebig so eingestellt werden, daß die Fluoreszenzintensitäten gemessen werden können.

Ein Ausführungsbeispiel der Erfindung gemäß Anspruch 5 wird im folgenden unter Bezugnahme auf Fig. 11 erläutert. Der innere Rand der Öffnung 12a′ einer Blende 12a und der vordere Teil der Abdeckplatte 12b, die an der Unterseite der Blende 12a horizontal verschiebbar ist, werden jeweils durch die konischen Teile 35 und 36 gebildet, deren Öffnungsweiten sich von der Seite der Fluoreszenzentstehung zur Seite der Fluoreszenzmessung vergrößern. Im Glaselementhalter 1 wird das Fluoreszenzglaselement 2 durch eine Innenstange 37 und eine Außenstange 38 gehalten.

Bei diesem Ausführungsbeispiel stören die konischen Teile in der Öffnung 12a′ der Blende 12a und der Abdeckplatte 12b die Fluoreszenz weniger als bei einem Gerät, das keine konischen Teile besitzt. Damit wird, selbst wenn diese Teile eine beträchtliche Stärke aufweisen, genügend Fluoresenz nachgewiesen, und die Einrichtung zur Fluoreszenzintensitätsmessung 11 mißt die von der vorher festgelegten Öffnungsweite ausgehende Fluoreszenz genau.

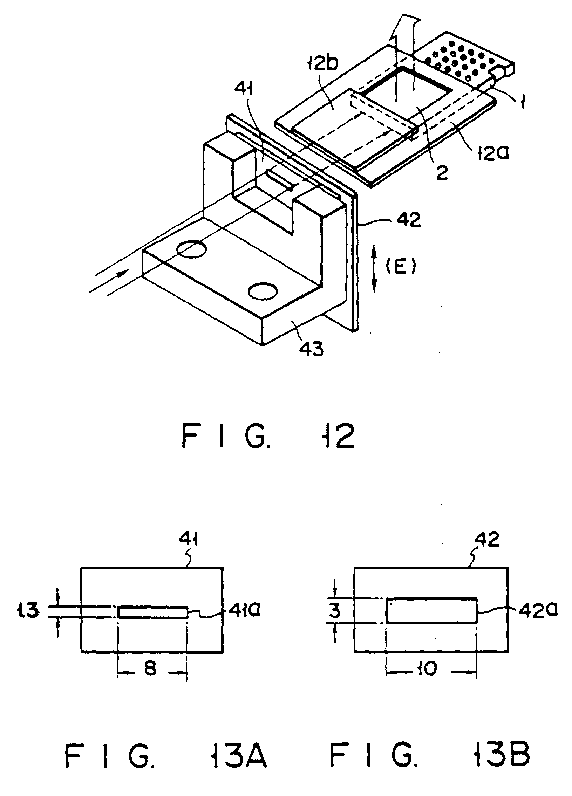

Ein Ausführungsbeispiel der Erfindung gemäß Anspruch 6 und 7 wird im folgenden unter Bezugnahme auf Fig. 12 bis 15 erläutert. Der Aufbau dieses Ausführungsbeispiels entspricht nahezu vollständig dem des ersten Ausführungsbeispiels, mit Ausnahme eines Blendensystems für UV-Licht. Dieses Blendensystem wird für UV-Licht benutzt, um die Positionen und/oder die Flächen des einfallenden UV-Lichts auf einem Fluoreszenzglaselement 2 zu verändern. Fig. 12 zeigt einen Zustand, in dem anregendes UV-Licht über das Blendensystem für UV-Licht zum Fluoreszenzglaselement 2 gelangt. Dieses UV-Lichtblendensystem umfaßt normalerweise eine erste Blende 41 zur Einstellung einer Eintrittsfläche für UV-Licht und eine zweite Blende 42, die an der Rückseite der ersten Blende 41 in der durch einen Pfeil (E) angegebenen Richtung verschoben werden kann. Die erste Blende 41 ist an einem umgedrehten L-förmigen Teil 43 befestigt und bildet darin eine Öffnung 41a auf dem Einfallweg des UV-Lichts, was aus Fig. 13(a) deutlich wird. Wenn das Fluoreszenzglaselement 2 eine Stärke von 1,5 mm und eine Länge von 16 mm hat, ist die Öffnung 41a 1,3 mm breit und 8,0 mm lang. In der zweiten Blende 42 bildet sich eine Öffnung 42a von 3 mm Breite und 10 mm Länge.

Im folgenden wird die Methode zur Messung der Fluoreszenzintensitäten erläutert, bei der die Positionen und die Flächen des einfallenden UV-Lichts dadurch verändert werden, daß die Blende in der durch Pfeil (E) angegebenen Richtung bewegt wird und die Fluoreszenzintensitäten gemessen werden. Zuerst werden die Gehäuse 3 und 4 mit dem Fluoreszenzglaselement 2 an einen vorgesehenen Ort transportiert, und dann wird das Fluoreszenzglaselement 2 in ähnlicher Weise aus den Gehäusen 3 und 4 entfernt. Danach wird das Fluoreszenzglaselement 2 in die Fluoeszenzmeßposition gebracht. Daraufhin wird das UV-Licht aus einer UV-Lichtquelle zum Fluoreszenzglaselement 2 über die Öffnung 41a der Blende 41 und Öffnung 42a der Blende 42 geleitet, und Fluoreszenz 7 wird an der Fluoreszenzmeßseite des Fluoreszenzglaselements 2 emittiert. In dieser Stufe kann die Öffnungsweite der Öffnung 12a′ durch schrittweise oder kontinuierliche waagerechte Verschiebung der Abdeckplatte 12b, wie oben beschrieben, verändert werden, um die Fluoreszenzintensitätsverteilung zu ermitteln. Die von der Fluoreszenzmeßseite des Fluoreszenzglaselements 2 ausgehende Fluoreszenz wird gemessen, indem die Positionen und die Flächen des einfallenden UV-Lichts verändert werden. Damit ergibt sich die vertikale Fluoreszenzintensitätsverteilung, die mit Hilfe der Einrichtung zur Fluoreszenzintensitätsmessung 11 gemessen wird, und die Qualität der Strahlung sowie die Einfallsrichtung (Vorderseite oder Rückseite), die mit Hilfe der Einrichtung 13 ermittelt werden, wie bereits erläutert.

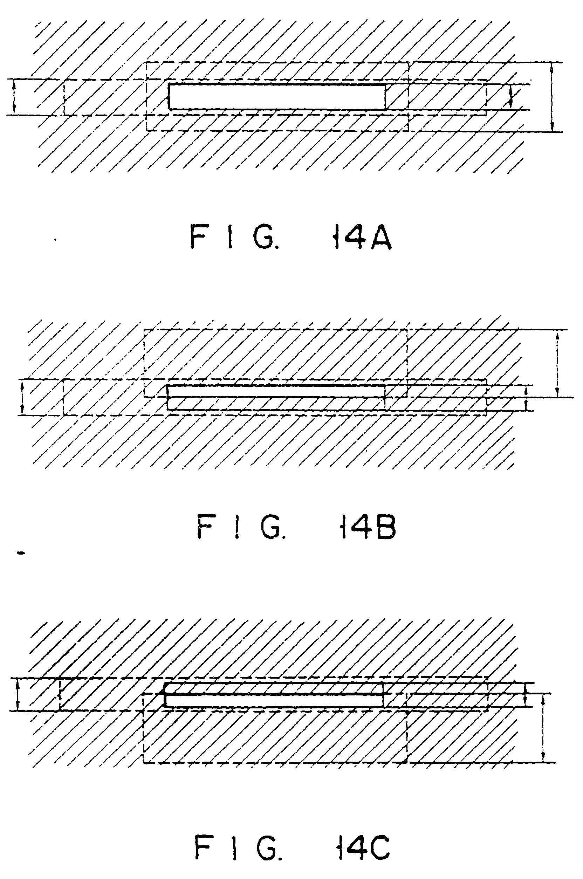

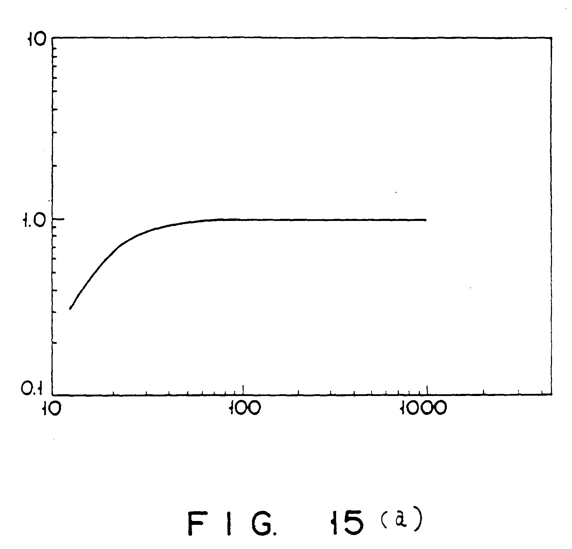

Normalerweise wird die Strahlendosis zu einem Zeitpunkt gemessen, in dem die Öffnung 41a der Blende 41 und die Öffnung 42a der Blende 42 koinzidieren (s. Fig. 14(a)), so daß das UV-Licht im wesentlichen über die gesamte Tiefe des Fluoreszenzglaselements 2 einfällt. Wenn die Fluoreszenzintensität aus dem Fluoreszenzglaselement 2 einen vorher festgelegten Schwellenwert übersteigt, wird die Qualität der Strahlung wie folgt berücksichtigt. Wie aus Fig. 14(b) und 14(c) ersichtlich, wird die Blende 42 mit Hilfe eines Positioniermotors oder im Wechsel nach oben und nach unten in der Weise angetrieben, daß die obere Hälfte und die untere Hälfte der Öffnung 41a der Blende 41 im Wechsel geöffnet werden. Dann werden die Fluoreszenzintensitäten gemessen, und es ergeben sich die Fluoreszenzintensitätsverteilungen. Damit ergeben sich die Fluoreszenzintensitäten der oberen Hälfte und der unteren Hälfte des Fluoreszenzglaselements 2.

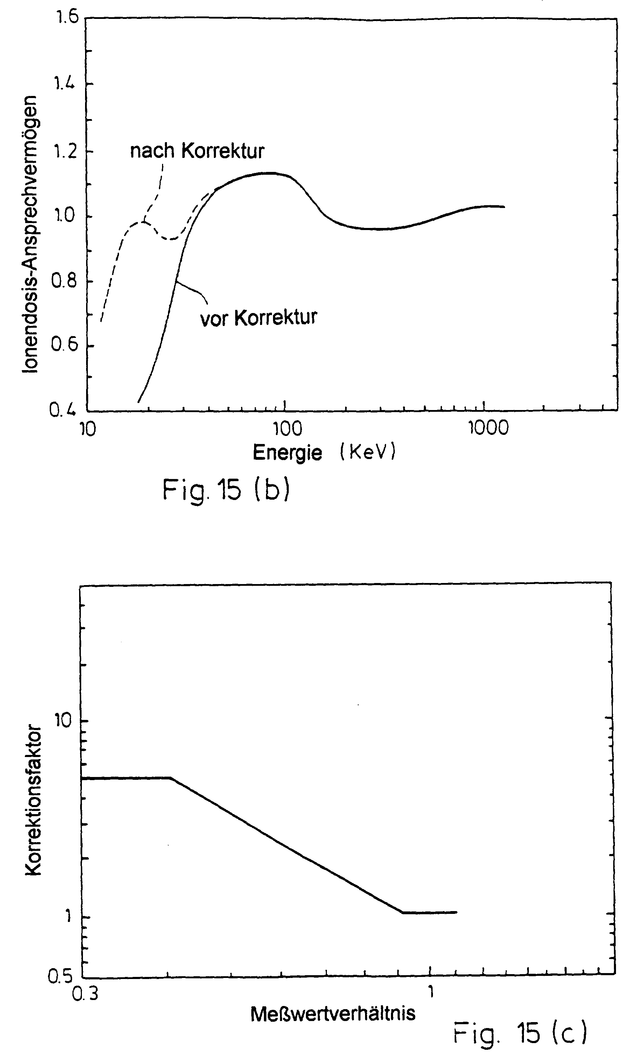

Im allgemeinen werden Gamma- und Röntgenstrahlen im Bereich niedriger Energien unterhalb von 30 keV im Glas selbst stark absorbiert. Wenn das Fluoreszenzglaselement 2 bestrahlt wird, wird Fluoreszenz vorzugsweise nahe der Glasoberfläche erzeugt. Deshalb zeigt die Kurve in Fig. 15(a) das Meßwertverhältnis der Fluoreszenzintensität für das im Bereich der unteren Hälfte einfallende UV-Licht zur Fluoreszenzintensität für das im Bereich der:oberen Hälfte des Fluoreszenzglaselements 2 einfallenden UV-Lichts, d.h. das Verhältnis der Fluoreszenzintensität in Fig. 14(c) zur Fluoreszenzintensität in Fig. 14(b)).

Wie aus Fig. 15(a) deutlich ersichtlich, ist das relative Meßwertverhältnis für die Energie von Gamma- oder Röntgenstrahlung oberhalb von 30 keV gleich 1, verringert sich jedoch für Energien unterhalb von 30 keV sehr deutlich. Die Werte der in Fig. 15(a) gezeigten Kurve werden zuvor in der Auswerteeinheit 13 gespeichert, und die Bestrahlungsenergie der Gamma- oder Röntgenstrahlen wird darauf untersucht, ob sie oberhalb von 30 keV liegt. Falls die Energie weniger als 30 keV beträgt, ergibt sich das relative Meßwertverhältnis aus dem Verhältnis der Fluoreszenzintensität in Fig. 14(c) zur Fluoreszenzintensität in Fig. 14(b). Die Strahlenqualität ergibt sich aus den Werten der Kurve für das relative Meßwertverhältnis. Außerdem wird die Richtung des Strahleneinfalls von der Vorderseite oder Rückseite über das Meßwertverhältnis ermittelt. Weiterhin gilt, daß bei einer Energie von weniger als 30 keV das Ionendosis-Ansprechvermögen in Abhängigkeit von der Energie im Freien etwas geringer ist; vgl. Fig. 15(b). In diesem Fall kann es auch durch Multiplikation mit dem aus den in Fig. 15(a) enthaltenen Angaben zum Meßwertverhältnis bestimmten Korrektionsfaktor korrigiert werden. Fig. 15(c) zeigt eine Beziehung zwischen diesem Meßwertverhältnis und dem Korrektionsfaktor. Diese Beziehung wird zuvor in der Auswerteeinheit gespeichert, und die Korrektion wird dann automatisch ausgeführt.

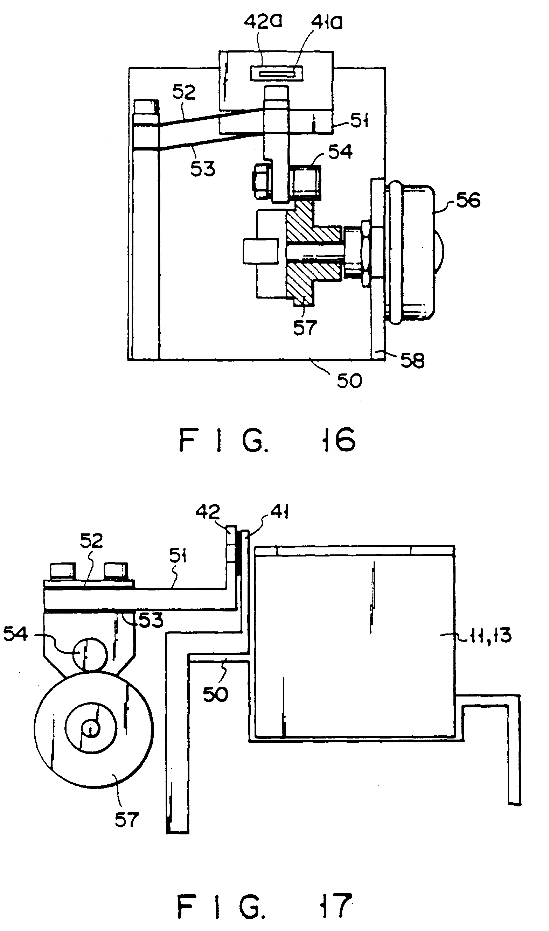

Bei der Erfindung gemäß Anspruch 8 kann die Blende 42 entweder an der Vorderseite oder an der Rückseite der Blende 41 vorgesehen werden. In Fig. 12 wird die Blende 42 an der Rückseite der Blende 41 bewegt. Die Blende 42 kann jedoch, wie in Fig. 16 und 17 gezeigt, auch an der Vorderseite der Blende 41 bewegt werden. Die Blende 41 mit einer schmalen Öffnung 41a, entsprechend der Öffnung der Blende 41 in Fig. 13(a), ist an der Vorderseite eines Meßkörpers 50 befestigt, der sich an der Seite befindet, auf der das UV-Licht auftrifft. Die Blende 42 mit weiter Öffnung 42a, entsprechend der in Blende 42, Fig. 12(b), ist an der Einfallseite des UV-Lichts angebracht, d.h. an der Vorderseite der Blende 41, und an einem L-förmigen Auflageelement 51 befestigt. Das L-förmige Auflageelement 51 wird zusammen mit einem Nockenverfolger 54 von zwei parallelen Plattenfedern 52 und 53 gehalten und kann damit durch Verbiegen der Plattenfedern 52 und 53 nach oben und unten bewegt werden. Der Nockenverfolger 54 wird durch die einseitige Kraft der Plattenfedern 52 und 53 gegen eine Nocke 57 gedrückt. Die Bezugsnummer 58 zeigt einen Auflagerahmen.

In dem Ausführungsbeispiel gemäß Fig. 16 und 17 kommt der Nockenverfolger 54 mit der Nocke 57 normalerweise über die Plattenfedern 52 und 53 und das L-förmige Auflageelement 51 in Berührung. Die Lage der Öffnung 42a der an das L-förmige Auflageelement 51 befestigten Blende 42 wird durch die Drehlage der Nocke 57 bestimmt. Es wird angenommen, daß ein Stellmotor 56 von einer Anfangsposition aus gedreht wird, in der eine Anfangsöffnungsweite durch die in einem Anfangszustand angeordneten Blenden festgelegt wird. Dann bewegt sich die Kontaktstellung der Nocke 54 mit dem Nockenverfolger 57 je nach Drehwinkel des Motors 56 nach oben und unten. Die Blende 42 bewegt sich parallel zu der festen Blende 41 nach oben und unten. Das führt dazu, daß sich die für den Einfall des UV-Lichts gewünschte Öffnungsweite ergibt und daß die gewünschte Position eingestellt wird. Außerdem können Öffnungsweite und Position des einfallenden Lichts leicht kontrolliert werden.

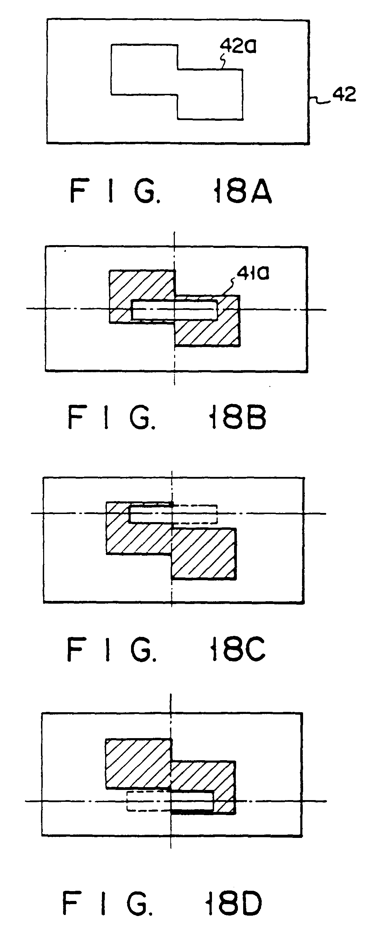

Bei diesem Ausführungsbeispiel werden zwei parallele Plattenfedern 52 und 53 benutzt. An ihrer Stelle kann jedoch auch ein Gleitmechanismus benutzt werden. Auch kann die bewegliche Blende 42 mit einer Öffnung 42a gemäß Fig. 18(a) gebildet werden. Wenn die Blende 42 nach oben und unten bewegt wird, teilt sich das UV-Licht auf in den linken und in den rechten Teil, s. Fig. 18(c) und 18(d), und mehrere Öffnungsweiten und -formen werden selektiert.

Bei allen Ausführungsbeispielen können Strahlenqualität und Strahleneinfallsrichtung nicht nur für Gamma- und Röntgenstrahlen, sondern auch für Betastrahlen ermittelt werden. Die Blende 12a ist so aufgebaut, wie es Fig. 2 und 3 zeigen; jedoch ist auch ein anderer Aufbau möglich, mit dem die Verteilung der Fluoreszenzintensität in ähnlicher Weise bestimmt werden kann. Beispielsweise kann eine mit Schlitz von 1/n der Breite der Fluoreszenzmeßseite versehene Blende 12a schrittweise um denselben Betrag der Schlitzbreite verschoben werden, um die Fluoreszenzintensitäten zu messen, oder eine mit Schlitz von 1/n der Breite des Fluoreszenzglaselements versehene Blende 12a kann fixiert und ein Fluoreszenzglaselement schrittweise um denselben Betrag der Schlitzbreite bewegt werden.

Bei den genannten Ausführungsbeispielen ist das Glasdosimeter so angeordnet wie in Fig. 25, so daß die von der Decke und vom Boden ausgehende Strahlenrichtung ermittelt werden kann. Wenn jedoch ein anderes Glasdosimeter zusammen mit dem oben genannten Glasdosimeter benutzt wird, ist es so angebracht, daß die durch β = 0° angezeigte Richtung die Richtung für einen Strahleneinfall von der rechten Körperseite des Mitarbeiters und die durch β = 180° angezeigte Richtung die Richtung für einen Strahleneinfall von der linken Seite angibt. Deshalb kann der Strahleneinfall annähernd dreidimensional abgeschätzt werden, wodurch sich die Genauigkeit der Abschätzung erhöht. Darüber hinaus ist es durch Verbesserung der Meßgenauigkeit bei der Ermittlung der Strahlenqualität möglich, den Dosismeßwert hinsichtlich der Energieabhängigkeit zu korrigieren und damit die Genauigkeit der Dosismessung zu erhöhen.

Eine Reihe von Abwandlungen ist möglich, ohne daß vom Umfang der vorliegenden Erfindung, die in den Patentansprüchen definiert ist, abgewichen wird.

Die vorliegende Erfindung hat folgende technische Vorteile: Aufgrund der Erfindung gemäß Anspruch 1 kann die Fluoreszenzintensitätsverteilung an verschiedenen Fluoreszenzmeßpositionen und -flächen bestimmt werden durch Änderung der Meßpositionen und -flächen der vom Fluoreszenzglaselement ausgehenden Fluoreszenz mit Hilfe eines Abdeckmechanismus.

Aufgrund der Erfindung gemäß Anspruch 2 können Strahlenqualität und Einfallrichtung der Strahlung aus einer Vielzahl von Fluoreszenzintensitätsverteilungen durch Änderung der Fluoreszenzmeßpositionen und -flächen mittels Abdeckmechanismus ermittelt werden, wodurch eine sichere Kontrolle der Strahlenexposition gewährleistet wird.

Aufgrund der Erfindung gemäß Anspruch 3 können durch Bewegung einer Abdeckplatte die Öffnungsweite einer Blendenöffnung und ihre Positionen in einer Vielzahl von Schritten leicht verändert werden.

Aufgrund der Erfindung gemäß Anspruch 4 verringert sich durch Verwendung einer Blende als Glaselementablageplatte die Anzahl der Bauteile, und das Gerätevolumen kann wirksam genutzt werden.

Aufgrund der Erfindung gemäß Anspruch 5 kann Fluoreszenz von einem Fluoreszenzglaselement unabhängig von der Dicke einer Blende nachgewiesen werden, und es ist möglich, die Fluoreszenzintensität genau zu messen, um die Fluoreszenzintensitätsverteilung zu berechnen; desgleichen kann die Strahlenqualität ermittelt werden.

Aufgrund der Erfindung gemäß Anspruch 6 können weiterhin die Einfallspositionen und -flächen des UV-Lichts in einer Vielzahl von Schritten auf einfache Weise verändert werden, und die Verteilung der Fluoreszenzintensität kann bestimmt werden.

Darüber hinaus ist es aufgrund der Erfindung gemäß Anspruch 7 möglich, Einfallsrichtungen und -flächen des UV-Lichts zu verändern und die Strahlenqualität sowie die Strahleneinfallsrichtungen zu ermitteln, wodurch die Kontrolle der Strahlenexposition gewährleistet wird.

Weiterhin wird aufgrund der Erfindung gemäß Anspruch 8 eine Öffnung von beliebiger Fläche und Größe an beliebiger Stelle erzeugt, durch die UV-Licht geleitet wird, indem eine von zwei Blenden jeweils mit beliebig gewählter Öffnung bewegt wird.

### Liste der Bezugsnummern

- 1: Glaselementhalter
- 2: Fluoreszenzglaselement
- 11: Vorrichtung zur Messung der Fluoreszenzintensität
- 12: Fluoreszenzblendensystem
- 12a: Blende
- 12a′: Öffnung
- 12b: Abdeckplatte
- 13: Auswerteeinheit
- 23: Stellmotor
- 24: Schraubenwelle
- 25: Block
- 32: photoelektronisches Wandlerteil
- 35,36: konische Bereiche
- 41: erste Blende
- 41a: Öffnung
- 42: zweite Blende
- 42b: Öffnung
- 52,53: Plattenfedern
- 54: Nockenverfolger
- 56: Stellmotor
- 57: Nocke

## Patentansprüche

1. Gerät zur Messung der Strahlendosis eines Fluoreszenzglaselements (2), in dem ein strahlenexponiertes Fluoreszenzglaselement (2) durch UV- Licht anreg bar ist, mit einer Vorrichtung zur Messung der Fluoreszenzintensität (11) mit der die Strahlendosis aufgrund der durch das UV- Licht im Fluoreszenzglaselement (2) angeregten und aus einer Meßseite des Fluoreszenzglaselements (2) austretenden Fluoreszenzstrahlung meßbar ist, gekennzeichnet durch ein Fluoreszenzblendensystem (12) zur Veränderung der Meßposition und/oder der Meßfläche auf der Meßseite des Fluoreszenzglaselements (2) in mindesten 3 Schritten, wobei die Vorrichtung zur Messung der Fluoreszenzintensität (11) derart ausgestaltet ist, daß damit die Intensitätsverteilung der durch das Fluoreszenzblendensystem (12) ausgewählten Fluoreszenz ermittelt werden kann.

2. Gerät zur Messung der Strahlendosis nach Anspruch 1, gekennzeichnet durch eine Auswerteeinheit (13) zur Ermittlung der Strahlenqualität und/oder der Strahleneinfallsrichtung aus der Intensitätsverteilung der durch das Fluoreszenzblendensystem (12) ausgewählten Fluoreszenz.

3. Gerät zur Messung der Strahlendosis nach Anspruch 1 oder 2, dadurch gekennzeichnet, daß das Fluoreszenzblendensystem (12) aus einer Blende (12a) mit einer Öffnung (12a') von vorher festgelegter Größe und einer Abdeckplatte (12b) besteht, wobei die Abdeckplatte der Veränderung der Meßposition und/oder der Meßfläche auf der Meßseite des Fluoreszenzglaselements (2) dient.

4. Gerät zur Messung der Strahlendosis nach Anspruch 3, dadurch gekennzeichnet, daß das Fluoreszenzblendensystem (12) eine Ablageplatte für das Fluoreszenzglaselement (2) enthält.

5. Gerät zur Messung der Strahlendosis nach Anspruch 3, dadurch gekennzeichnet, daß die Kante der Öffnung (12a') der Blende (12a) und der vordere Teil der Abdeckplatte (12b) konische Teile aufweisen, die sich vom Fluoreszenzglaselement (2) aus gesehen an der Seite der Fluoreszenzmessung befinden.

6. Gerät zur Messung der Strahlendosis nach einem der Ansprüche 1 bis 5, gekennzeichnet durch ein Blendensystem (41, 42) für das UV- Licht zur Veränderung der Eintrittsposition und/oder der Eintrittsfläche des UV- Lichts zur Anregung des Fluoreszenzglaselements (2) in mindestens zwei Schritten, wobei die Vorrichtung zur Messung der Fluoreszenzintensität (11) des Fluoreszenzglaselements (2) derart ausgestaltet ist, daß damit die Intensitätsverteilung der Fluoreszenz ermittelt werden kann welche durch das vom Blendensystem (41, 42) auswählbare UV- Licht angeregt wird.

7. Gerät zur Messung der Strahlendosis nach Anspruch 6, dadurch gekennzeichnet, daß die Auswerteeinheit (13) so ausgelegt ist, daß mit ihr Strahlenqualität und/oder Strahleneinfallsrichtung aufgrund der Verteilung der Fluoreszenzintensität welche durch das vom Blendensystem (41, 42) auswähbare UV- Licht angeregt wird ermittelt werden kann.

8. Gerät zur Messung der Strahlendosis nach einem der Ansprüche 1 bis 7, dadurch gekennzeichnet, daß das Fluoreszenzblendensystem (12) oder das Blendensystem (41, 42) für das UV-Licht zwei Blenden mit verschiedenen Öffnungsweiten und verschiedenen Öffnungsformen besitzt, wobei mindesten eine der Blenden so ausgeführt ist, daß sie bewegt werden kann.

## Claims

1. Apparatus for measuring the radiation dose of a fluorescent glass element (2), in which a fluorescent glass element (2), which is exposed to radiation, is excitable by UV light, having a device for measuring the fluorescence intensity (11), with which the radiation dose can be measured on the basis of the fluorescent radiation which is excited by the UV light in the fluorescent glass element (2) and emerges from a measuring side of the fluorescent glass element (2), characterised by a fluorescent diaphragm system (12) for changing the measuring position and/or the measuring face on the measuring side of the fluorescent glass element (2) in at least 3 steps, the device for measuring the fluorescence intensity (11) being so configured that the intensity distribution of the fluorescence, selected by the fluorescent diaphragm system (12), can thereby be determined.

2. Apparatus for measuring the radiation dose according to claim 1, characterised by an evaluation unit (13) for determining the radiation quality and/or the direction of radiation impingement from the intensity distribution of the fluorescence selected by the fluorescent diaphragm system (12).

3. Apparatus for measuring the radiation dose according to claim 1 or 2, characterised in that the fluorescent diaphragm system (12) includes a diaphragm (12a) provided with an aperture (12a') of a predetermined size and a cover plate (12b), the cover plate serving to change the measuring position and/or the measuring face on the measuring side of the fluorescent glass element (2).

4. Apparatus for measuring the radiation dose according to claim 3, characterised in that the fluorescent diaphragm system (12) includes a supporting plate for the fluorescent glass element (2).

5. Apparatus for measuring the radiation dose according to claim 3, characterised in that the edge of the aperture (12a') of the diaphragm (12a) and the front portion of the cover plate (12b) have conical parts which, when viewed from the fluorescent glass element (2), are situated on the side of the fluorescence measuring means.

6. Apparatus for measuring the radiation dose according to one of claims 1 to 5, characterised by a diaphragm system (41, 42) for the UV light for changing the impingement position and/or the impingement face of the UV light for exciting the fluorescent glass element (2) in at least two steps, the device for measuring the fluorescence intensity (11) of the fluorescent glass element (2) being so configured that the intensity distribution of the fluorescence can thereby be determined, which fluorescence is excited by the UV light selectable by the diaphragm system (41, 42).

7. Apparatus for measuring the radiation dose according to claim 6, characterised in that the evaluation unit (13) is so designed that it can determine the radiation quality and/or the direction of radiation impingement on the basis of the distribution of the fluorescence intensity which is excited by the UV light selectable by the diaphragm system (41, 42).

8. Apparatus for measuring the radiation dose according to one of claims 1 to 7, characterised in that the fluorescent diaphragm system (12) or the diaphragm system (41, 42) for the UV light has two diaphragms with different widths of opening and different aperture shapes, at least one of the diaphragms being so configured that it can be moved.

## Revendications

1. Appareil pour la mesure de la dose de rayonnement d'un élément de verre fluorescent (2), appareil dans lequel un élément de verre fluorescent (2) exposé au rayonnement est susceptible d'être stimulé par de la lumière UV, avec un dispositif pour la mesure de l'intensité (11) de la fluorescence avec lequel la dose de rayonnement est susceptible d'être mesurée sur la base du rayonnement de fluorescence stimulé par la lumière ultraviolette dans l'élément de verre fluorescent (2) et sortant d'un côté de mesure de l'élément en verre fluorescent (2),
appareil caractérisé par un système d'écran de fluorescence (12) pour modifier la position de mesure et/ou la surface de mesure sur le côté de mesure de l'élément en verre fluorescent (2) en au moins trois étapes, tandis que le dispositif pour la mesure de l'intensité (11) de la fluorescence est constitué de façon qu'avec ce dispositif la répartition de l'intensité de la fluorescence sélectionnée par le système d'écran (12) de fluorescence, puisse être déterminée.

2. Appareil pour la mesure de la dose de rayonnement selon la revendication 1 caractérisé par une unité d'exploitation (13) pour déterminer la qualité du rayonnement et/ou la direction d'incidence du rayonnement à partir de la répartition de l'intensité de la fluorescence sélectionnée par le système d'écran de fluorescence (12).

3. Appareil pour la mesure de la dose de rayonnement selon la revendication 1 ou la revendication 2, caractérisé en ce que le système d'écran de fluorescence (12) est constitué d'un écran (12a) avec une ouverture (12a') de grandeur préalablement fixée, et d'une plaque de recouvrement (12b), cette plaque de recouvrement servant à modifier la position de mesure et/ou la surface de mesure sur le côté de mesure de l'élément en verre fluorescent (2).

4. Appareil pour la mesure de la dose de rayonnement selon la revendication 3, caractérisé en ce que le système d'écran de fluorescence (12) comprend une plaque de dépôt pour l'élément de verre fluorescent (2).

5. Appareil pour la mesure de la dose de rayonnement selon la revendication 3, caractérisé en ce que le bord de l'ouverture (12a') de l'écran (12a) et de la partie antérieure de la plaque de recouvrement (12b) comporte des parties coniques qui, vues à partir de l'élément en verre fluorescent (2), se trouvent du côté de la mesure de fluorescence.

6. Appareil pour la mesure de la dose de rayonnement selon l'une des revendications 1 à 5, caractérisé par un système d'écrans (41, 42) de la lumière UV pour la modification de la position d'entrée et/ou de la surface d'entrée de la lumière UV, pour la stimulation de l'élément de verre fluorescent (2) en au moins deux étapes, tandis que le dispositif pour la mesure de l'intensité (11) de la fluorescence de l'élément en verre fluorescent (2) est constitué de façon qu'avec ce dispositif puisse être déterminée la répartition d'intensité de la fluorescence qui est stimulée par la lumière ultraviolette pouvant être sélectionnée par le système d'écrans (41, 42).

7. Appareil pour la mesure de la dose de rayonnement selon la revendication 6, caractérisé en ce que l'unité d'exploitation (13) est prévue de façon qu'avec elle la qualité du rayonnement et/ou la direction d'incidence du rayonnement puisse être déterminée en vertu de la répartition de l'intensité de la fluorescence stimulée par la lumière UV pouvant être sélectionnée par le système d'écrans (41, 42).

8. Appareil pour la mesure de la dose de rayonnement selon l'une des revendications 1 à 7, caractérisé en ce que le système d'écrans de fluorescence (12) ou bien le système d'écrans (41, 42) pour la lumière UV comporte deux écrans avec des largeurs d'ouverture différentes et des formes d'ouverture différentes, tandis qu'au moins l'un des écrans est réalisé de façon qu'elles puissent être déplacées.
